## Europäisches Patentamt

## European Patent Office

## Office européen des brevets

(19)

(11) Numéro de publication: **0 150 641**
**B1**

(12)

# FASCICULE DE BREVET EUROPEEN

(45) Date de publication du fascicule du brevet:
**24.06.87**

(51) Int. Cl.⁴: **B 60 S 1/18**

(21) Numéro de dépôt: **84402538.7**

(22) Date de dépôt: **10.12.84**

(54) **Dispositif d'essuie-glace à mecanisme de changement de longueur efficace de la timonerie, pour l'escamotage du balai en position de repos.**

(30) Priorité: **26.12.83 FR 8320768**

(43) Date de publication de la demande:
**07.08.85 Bulletin 85/32**

(45) Mention de la délivrance du brevet:
**24.06.87 Bulletin 87/26**

(84) Etats contractants désignés:
**DE FR IT**

(56) Documents cités:
**DE - A - 2 943 966**
**FR - A - 2 078 784**
**US - A - 3 242 767**

(73) Titulaire: **EQUIPEMENTS AUTOMOBILES MARCHAL,
26, rue Guynemer, F-92132 Issy-les-Moulineaux (FR)**

(72) Inventeur: **Eustache, Jean-Pierre, 5, rue Albert Camus,
F-92160 Antony (FR)**
Inventeur: **Maubray, Daniel Lucien, 16, Boulevard Rodin,
F-92130 Issy-Les-Moulineaux (FR)**

(74) Mandataire: **Peuscet, Jacques, Cabinet Peuscet 68, rue
d'Hauteville, F-75010 Paris (FR)**

ACTORUM AG

## Description

La présente invention concerne les dispositifs d'essuie-glace, et se rapporte plus particulièrement à un mécanisme de changement de la longueur efficace de la timonerie reliant un moteur d'entraînement à un bras porte-balai d'essuie-glace, afin que le bras et le balai correspondant puissent être placés dans une position d'arrêt, dite également position de «parking», située en dehors du secteur angulaire balayé par l'essuie-glace en fonctionnement normal. On peut ainsi escamoter l'essuie-glace en position d'arrêt sous un élément de carrosserie.

Plus précisément, l'invention concerne les dispositifs d'essuie-glace du genre de ceux qui comprennent un moteur électrique réversible sur l'arbre duquel une manivelle motrice est montée solidaire en rotation, au voisinage d'une première extrémité, ladite manivelle motrice étant reliée, au voisinage de sa seconde extrémité, à une biellette par ailleurs montée pivotante sur une manivelle réceptrice qui entraîne un bras porte-balai d'essuie-glace en rotation autour d'un axe fixe, de telle sorte que la rotation du moteur dans un premier sens, ou sens normal, est transformée en un mouvement angulaire alternatif du bras porte-balai autour de l'axe fixe, sur un secteur de balayage normal dont une extrémité est une position d'arrêt fixe, le dispositif comprenant de plus un mécanisme de changement de la longueur efficace de la biellette et de la manivelle motrice susceptible d'être actionné à la suite d'un changement du sens de rotation du moteur, ce mécanisme commandant, quand le moteur passe du sens normal au sens inverse, l'allongement de ladite longueur efficace et donc la venue du bras porte-balai dans une position angulaire de repos située à l'extérieur du secteur de balayage normal et commandant le retour à la longueur efficace initiale quand le moteur turne à nouveau dans le sens normal à partir de ladite position angulaire de repos externe au secteur de balayage normal, ledit mécanisme de changement de longueur efficace comprenant un maneton sur lequel s'articule la biellette, ce maneton étant monté de manière à pouvoir se déplacer suivant une trajectoire présentant une composante radiale par rapport à la manivelle, et un mécanisme de verrouillage susceptible de verrouiller le maneton contre une première butée relativement proche de l'axe moteur ou contre une deuxième butée relativement éloignée de l'axe moteur, selon le sens de rotation du moteur, le mécanisme de verrouillage comprenant un verrou monté pivotant par rapport à la manivelle autour d'un axe parallèle à l'axe moteur, le verrou étant asservi en position par un ensemble élastique.

Un dispositif d'essuie-glace de ce genre, selon le préambule de la revendication 1, est montré par DE-A-2 943 966. Selon ce document, le mécanisme de changement de la longueur efficace de la biellette fait intervenir un cliquet qui, lors de la rotation du moteur dans le sens inverse du sens normal, vient buter mécaniquement contre le nez d'une sorte de verrou articulé sur la manivelle, et provoquer ainsi l'allongement de la longueur efficace de la manivelle. La mise en butée mécanique du cliquet et du nez du verrou s'oppose à la poursuite du mouvement de rotation du moteur électrique dans le sens inverse du sens normal de rotation; il faut donc que l'alimentation électrique de ce moteur soit coupée en synchronisme avec la venue en butée mécanique pour éviter une détérioration du moteur. En cours d'usage, il est possible qu'un décalage se produise entre le butée mécanique et la commande de l'arrêt électrique du moteur, ce qui peut conduire à des inconvénients.

En outre, les chocs répétés dus à la venue en butée du nez du verrou contre le cliquet ne sont pas favorables à un fonctionnement doux et prolongé du dispositif. De tels chocs engendrent des bruits.

L'invention a pour but, surtout de fournir un dispositif d'essuie-glace du genre défini précédemment qui ne présente plus, ou à un degré moindre, les inconvénients évoqués ci-dessus et qui en outre soit d'une construction relativement simple et économique tout en assurant un fonctionnement souple et silencieux.

Selon l'invention, un dispositif d'essuie-glace du genre défini précédemment, est caractérisé par le fait que le verrou est disposé entre le moteur et la manivelle motrice et que l'ensemble élastique, lorsque le moteur tourne dans le sens normal, tend à faire tourner le verrou autour de son axe d'articulation dans un sens tel que le maneton ou une pièce solidaire de ce maneton soit verrouillé contre la première butée la plus proche de l'axe moteur, l'ensemble élastique étant chargé à la suite de l'inversion du sens de rotation du moteur, de manière à faire tourner le verrou autour de son axe d'articulation, par rapport à la manivelle motrice, dans le sens qui déverrouille le maneton ou une pièce solidaire de ce maneton, et autorise le déplacement dudit maneton ou de ladite pièce vers la deuxième butée la plus éloignée de l'axe du moteur, contre laquelle le verrouillage est alors assuré, ledit ensemble élastique étant déchargé à la suite d'une nouvelle rotation du moteur dans le sens normal de manière à assurer à nouveau le verrouillage du maneton ou de la pièce solidaire de ce maneton contre la butée la plus proche de l'axe moteur.

L'ensemble élastique comprend un ressort à spires disposé autour de l'arbre de sortie du moteur, dans une gorge annulaire ménagée dans une pièce solidaire du stator du moteur, le ressort étant entraîné en rotation autour de l'arbre du moteur par le verrou avec un frottement suffisant de la spire d'extrémité du ressort logée dans la gorge contre cette dernière, lorsque le moteur tourne dans le sens normal, pour que le verrou soit sollicité autour de son axe d'articulation dans un sens qui assure le verrouillage du maneton ou d'une pièce solidaire de ce maneton contre la butée la plus proche de l'axe moteur, tandis que lors d'une rotation du moteur en sens inverse, le ressort est chargé et fait pivoter le verrou autour de son axe d'articulation par rapport à la manivelle motrice de telle sorte que le maneton est déverrouillé et se déplace avec une composante radiale par rapport à la manivelle pour venir en appui et être verrouillé contre la butée la plus éloignée de l'axe moteur.

La gorge peut comporter un logement formant butée contre laquelle l'extrémité de la spire du ressort est propre à s'arc-bouter lors de la rotation du moteur en sens inverse.

Le logement formant butée est avantageusement disposé angulairement de manière que l'arc-boutement se produise à la suite d'environ 1/2 tour de rotation du moteur en sens inverse.

La susdite butée peut être formée par un trou ménagé dans le fond de la gorge, et l'extrémité du ressort logée dans la gorge est inclinée vers le fond de celle-ci de telle sorte que l'extrémité inclinée du ressort ne se bloque pas ou se bloque dans le trou selon que le moteur tourne dans le sens normal ou dans le sens contraire.

Le spires du ressort peuvent entourer l'arbre de sortie du moteur de telle sorte que le ressort est chargé par déroulement des spires et déchargé par enroulement des spires.

Le mécanisme de changement de longueur efficace peut comprendre une lumière oblongue ménagée dans la manivelle motrice au voisinage de la seconde extrémité de celle-ci, cette lumière étant disposée de façon que, dans le sens normal de rotation du moteur, le maneton, qui est engagé dans la lumière oblongue, soit entraîné en rotation par l'extrémité de la lumière oblongue constituant la butée la plus proche de l'axe de rotation, et que l'inversion du sens de rotation du moteur déplace le maneton dans la lumière oblongue jusqu'à ce qu'il soit entraîné en rotation par l'autre extrémité de la lumière oblongue qui constitue la deuxième butée la plus éloignée de l'axe de rotation de la manivelle motrice, le verrou étant monté pivotant sur la manivelle motrice autour d'un axe différent de l'axe moteur.

La lumière oblongue est inclinée par rapport à l'axe longitudinal de la manivelle. L'angle d'inclinaison entre l'axe de la lumière oblongue et l'axe longitudinal de la manivelle motrice est avantageusement compris entre 10° et 80°.

Selon une autre possibilité, le maneton peut être monté sur un coulisseau pouvant se déplacer radialement sur la manivelle, tandis que le verrou comporte un bras monté pivotant par rapport à la manivelle autour d'un axe confondu avec l'axe moteur.

Généralement, le coulisseau comporte du côté du verrou au moins un pion propre à coopérer avec les susdites premières et seconde butées.

De préférence, le bras du verrou comporte une échancrure sur chacun de ses bords longitudinaux, les deux échancrures étant décalées radialement l'une par rapport à l'autre pour constituer les susdites première et seconde butées, le susdit coulisseau comportant deux pions eux-mêmes décalés radialement, propres à coopérer avec chaque échancrure selon la position angulaire relative du verrou et de la manivelle, lesdites échancrures comportant une rampe pour faciliter l'entrée ou la sortie de pion lors du mouvement de rotation relatif entre le verrou et la manivelle.

L'invention consiste, mises à part les dispositions exposées ci-dessus, en certaines autres dispositions dont il sera plus explicitement question ci-après à propos d'exemples de réalisation décrits en détail avec référence aux dessins ci-annexés mais qui ne sont nullement limitatifs.

La figure 1, de ces dessins, est un schéma de balayage d'un dispositif d'essuie-glace selon l'invention.

La figure 2 est une vue en perspective éclatée d'un premier exemple de réalisation d'un mécanisme de changement de longueur efficace de la timonerie du dispositif d'essuie-glace.

La figure 3 est une représentation partielle et schématique du mécanisme de la figure 2 en position de fonctionnement normal.

Les figures 4, 5 et 6 sont des vues analogues à la figure 3 du mécanisme, respectivement lorsque le ressort vient en butée, en cours de déverrouillage de la position de petit rayon de la manivelle motrice, et au verrouillage en position de grand rayon de cette manivelle, pendant la phase de mise en position de «parking» de l'essuie-glace.

La figure 7 correspond à la position de «parking».

Les figures 8 et 9 correspondent respectivement au déverrouillage de la position de grand rayon et au verrouillage de la position de petit rayon de la manivelle, pendant la phase de retour en fonctionnement normal.

La figure 10 correspond à la figure 2 pour un second exemple de réalisation du mécanisme de changement de longueur efficace du dispositif d'essuie-glace selon l'invention.

La figure 11 correspond à la figure 2 pour un troisième exemple de réalisation d'un mécanisme de changement de longueur efficace selon l'invention.

La figure 12 est un schéma représentant, vu de dessous, le mécanisme de la figure 11 lorsque le moteur tourne dans le sens normal.

La figure 13 est un schéma illustrant, semblablement à la figure 12, le mécanisme lorsque le moteur, qui tournait suivant le sens normal, se met à tourner selon le sens inverse.

La figure 14, enfin, illustre le mécanisme lorsque le moteur tourne en sens inverse.

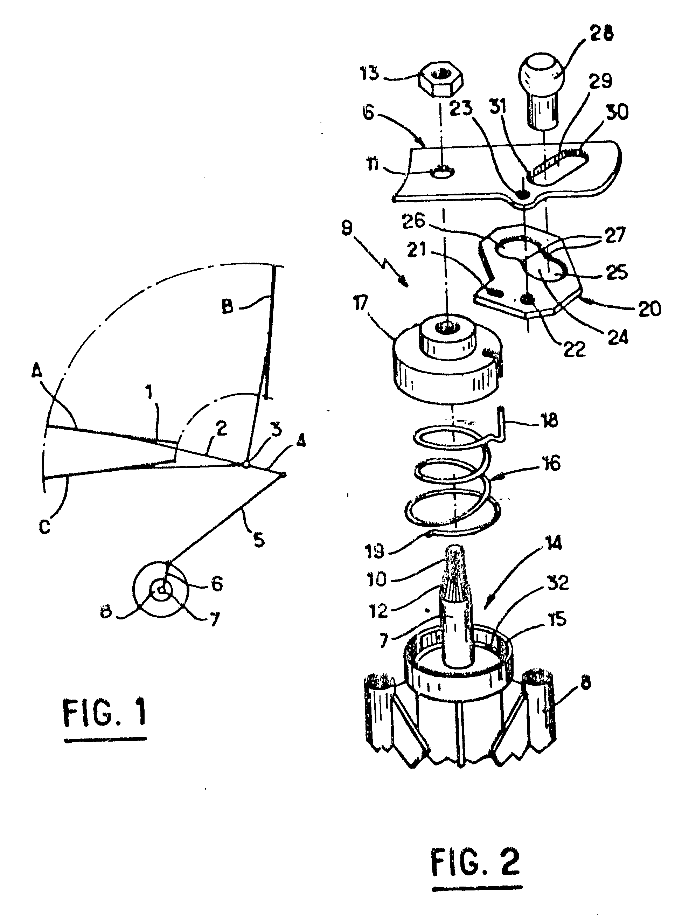

Sur la figure 1, un balai d'essuie-glace 1 est porté par un bras 2 pivoté autour du point fixe 3; le bras 2 se prolonge par une manivelle réceptrice 4 pivotée sur une extrémité d'une biellette 5, dont l'autre extrémité est reliée à une manivelle motrice 6, entraînée en rotation par l'arbre 7 d'un moteur électrique réversible 8. La liaison pivotante entre la manivelle 6 et la biellette 5 est assurée par un mécanisme 9 de changement de rayon efficace de la manivelle 6, qui est représenté sur la figure 2. En fonctionnement normal, le balai 1 est entraîné en mouvement alternatif entre la position d'arrêt fixe A et la position extrême de balayage B, lorsque le moteur 8 tourne dans un sens normal. A partir de la position A par un seul tour de rotation du moteur 8 en sens contraire, le balai 1 est amené en position B puis en position C, dite position de «parking», située au-delà de la position d'arrêt fixe A, grâce à la présence du mécanisme 9. A partir de cette position C, une rotation du moteur 8 dans le sens normal entraîne le balai 1 jusqu'en position B, puis le balai revient en position A, et reprend ensuite son mouvement alternatif de balayage normal entre les deux positions A et B.

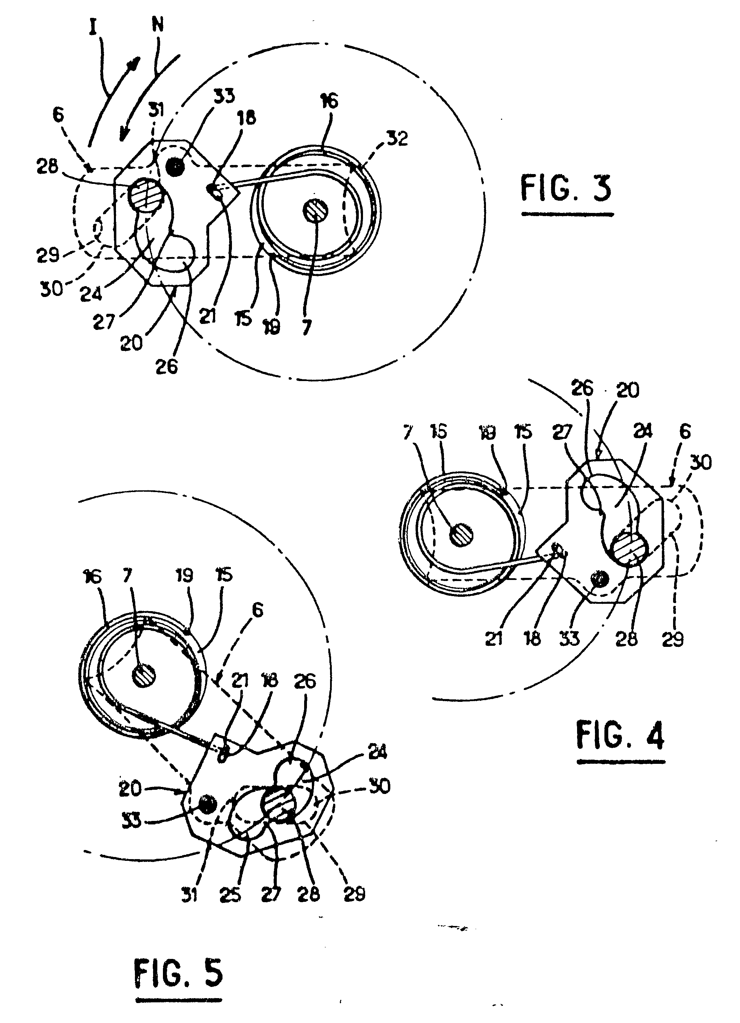

Sur la figure 2, on retrouve le moteur 8 dont l'arbre 7 se termine par une partie filetée 10 de diamètre réduit, ainsi que la manivelle motrice 6, représentée partiellement, et montée sur l'arbre 7 par un trou cannelé 11, qui solidarise la manivelle 6 en rotation sur l'arbre 7 par coopération avec la portée conique cannelée 12 présentée par ce dernier entre l'extrémité filetée 10 et la partie lisse de l'arbre 7. Un écrou 13 est serré sur l'extrémité filetée 10 afin de maintenir la manivelle 6 en position. Entre le moteur 8 et la manivelle 6 sont interposés, de bas en haut, un réceptacle cylindrique 14, fixé au socle du moteur 8 et dans la face supérieure duquel est ménagée une gorge circulaire 15, un ressort à spires 16 et un cache cylindrique 17. Le ressort 16 et le cache 17 sont montés autour de l'arbre 7, et la spire d'extrémité inférieure du ressort 16 est logée dans la gorge 15, tandis que la majeure partie des autres spires est logée dans le cache 17, qui est traversé par l'extrémité supérieure redressée 18 du ressort 16. L'extrémité inférieure 19 du ressort est inclinée vers le fond de la gorge 15. Par son extrémité supérieure 18, en saillie à l'extérieur du cache 17, le ressort est engagé avec un faible jeu dans une petite lumière de manœuvre 21 que présente un verrou 20. Ce dernier est également percé d'un trou d'axe 22 par lequel il est articulé, sous la manivelle 6, autour d'un axe 33, qui traverse également un trou d'axe 23 percé dans une oreille en saillie latérale de la manivelle 6. Le verrou 20 présente également, du côté du trou 22 sensiblement opposé à la lumière de manœuvre 21, une seconde lumière 24 ayant une forme générale en S et dont les deux lobes d'extrémité et arrondis 25 et 26 se raccordent de chaque côté par un coin 27 légèrement en saillie vers l'intérieur de la lumière en S 24. Dans cette lumière en S 24 s'engage l'extrémité inférieure d'un maneton 28 dont l'extrémité supérieure est conformée en rotule d'articulation de la biellette 5 sur la manivelle 6, et la partie cylindrique centrale du maneton 28 traverse librement une lumière oblongue 29, ménagée dans l'extrémité de la manivelle 6, selon une direction inclinée sur l'axe longitudinal de cette dernière, de sorte qu'une extrémité 30 de la lumière oblongue 29 est séparée du trou cannelé 11 par une distance ou un rayon supérieur à celui séparant ce trou 11 de l'autre extrémité 31 de la lumière oblongue 29. Comme représenté sur la figure 3, si, à partire de la position A du balai, l'arbre moteur 7 tourne dans le sens normal (flèche N), le maneton 28 est entraîné en rotation par la manivelle 6 en étant appliqué contre l'extrémité 31 de petit rayon de la lumière 29, en raison de la direction d'inclinaison de cette dernière sur l'axe longitudinal de la manivelle 6. De plus, l'extrémité inférieure 19 du ressort 16 est inclinée dans un sens tel, par rapport au fond de la gorge 15, qu'elle ne peut se bloquer dans un petit trou 32 ménagé, en position indexée, dans le fond de la gorge 15 lorsque le sens de rotation de l'arbre 7 est normal, de sorte que la rotation de la manivelle 6 avec l'arbre 7 entraîne la rotation avec l'arbre 7 du verrou 20, lié à la manivelle 6 par l'axe 33, et celle du ressort 16 et du cache 17 liés au verrou 20. Au cours de cette rotation, le ressort 16 tourne presque librement dans la gorge 15, avec cependant un frottement circonférentiel et axial limité de sa spire d'extrémité inférieure contre le fond et les parois de la gorge 15. Ce frottement est suffisant pour que le ressort 16 sollicite le verrou 20 en rotation autour de l'axe d'articulation 33 sur la manivelle 6, dans le même sens que la rotation de la manivelle 6 autour de l'axe moteur, de sorte que le verrou 20 bloque le maneton 28 contre l'extrémité 31 de petit rayon de la lumière 29 par la portion du lobe d'extrémité 25 limitée par le coin 27 correspondant dans la lumière en S 24. Ainsi, lorsque l'arbre 7 tourne dans le sens normal, l'équipage mobile constitué par la manivelle 6, le verrou 20, le maneton 28, le ressort 16 et le cache 17, conserve la position représentée sur la figure 3.

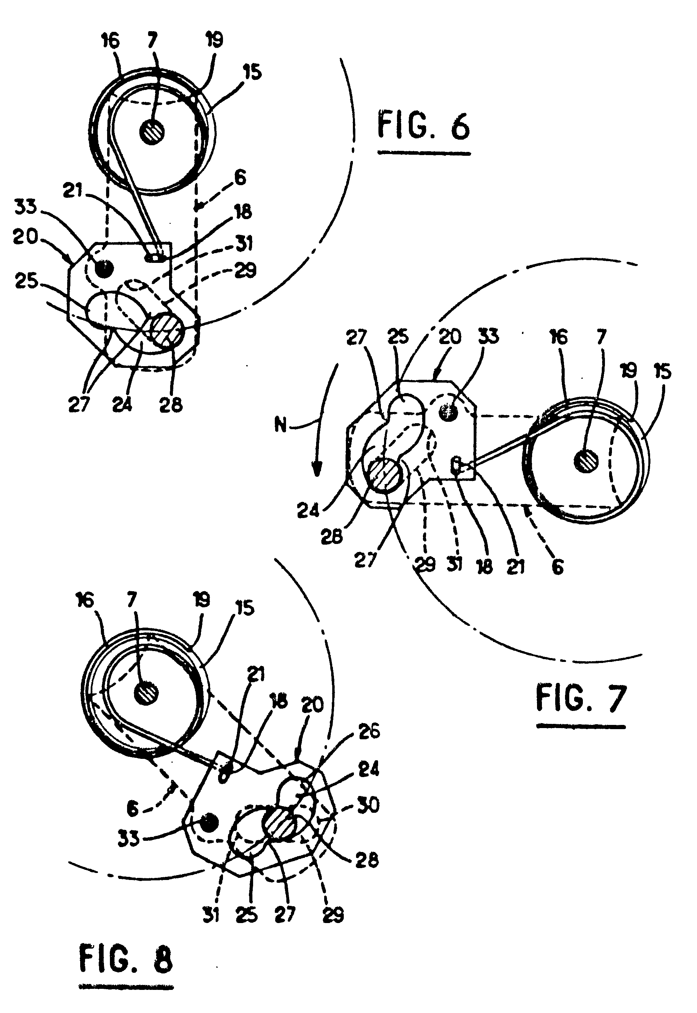

Si l'arbre 7 tourne sur un seul tour dans le sens contraire (flèche I sur la figure 3), à partir de la position A du balai, la configuration de l'équipage mobile n'est pas modifiée sur le premier demi-tour, à la fin duquel l'extrémité inférieure inclinée 19 du ressort 16 vient se bloquer dans le trou 32 à fond de gorge 15, comme représenté sur la figure 4. A partir de cet instant, comme la rotation de la manivelle 6 se poursuit dans le sens contraire avec l'arbre 7, et qu'elle entraîne le verrou 20 par l'axe 33, la rotation du verrou 20 avec l'arbre 7 vient bander le ressort 16 dont les spires sont sollicitées dans le sens du déroulement, l'extrémité inférieure 19 du ressort 16 s'arcboutant dans le trou 32. Le ressort 16 ainsi chargé sollicite alors le verrou 20 en rotation autour de l'axe 33 dans le même sens que le sens de rotation de la manivelle 6 autour de l'axe moteur, comme cela est représenté sur la figure 5. Cette rotation du verrou 20 autour de l'axe 33 assure tout d'abord le déverrouillage du maneton 28 de l'extrémité 31 de petit rayon de la lumière 29, en dégageant le maneton 28 du contact avec la portion de lobe 25 limitée par le coin 27 correspondant dans la lumière en S 24, et comme cette rotation du verrou 20 se poursuit, le maneton 28 vient en appui contre l'extrémité 30 de grand rayon de la lumière oblongue 29 dans la manivelle 6, en étant verrouillé dans cette position par la portion de l'autre lobe 26 limitée par le coin 27 correspondant dans la lumière en S 24 du verrou, comme cela est représenté sur la figure 6. A la fin du tour en sens contraire, l'équipage mobile est dans la configuration représentée sur la figure 7, dans laquelle le maneton 28 est verrouillé dans la position du grand rayon de la manivelle 6. L'augmentation de l'angle de balayage qui résulte de l'augmentation du rayon efficace de la manivelle 6, pendant le second demi-tour en sens contraire, permet de disposer le balai dans la position de «parking» C sur la figure 1.

En résumé, pendant le premier demi-tour en sens contraire, le balai passe de la position A à la position B, puis, pendant le second demi-tour, il passe de la position B à la position C, dans laquelle il est arrêté par l'interruption de la rotation du moteur.

Il est possible d'obtenir un fonctionnement analogue, sans coopération de l'extrémité inférieure 19 du ressort avec une butée, telle que celle réalisée par le trou 32 a fond de gorge 15, en assurant la sollicitation du verrou 20 en rotation autour de l'axe 33 grâce au frottement du ressort 16 dans la gorge 15; néanmoins, une butée est préférable pour assurer la charge du ressort et garantir la rotation souhaitée du verrou 20.

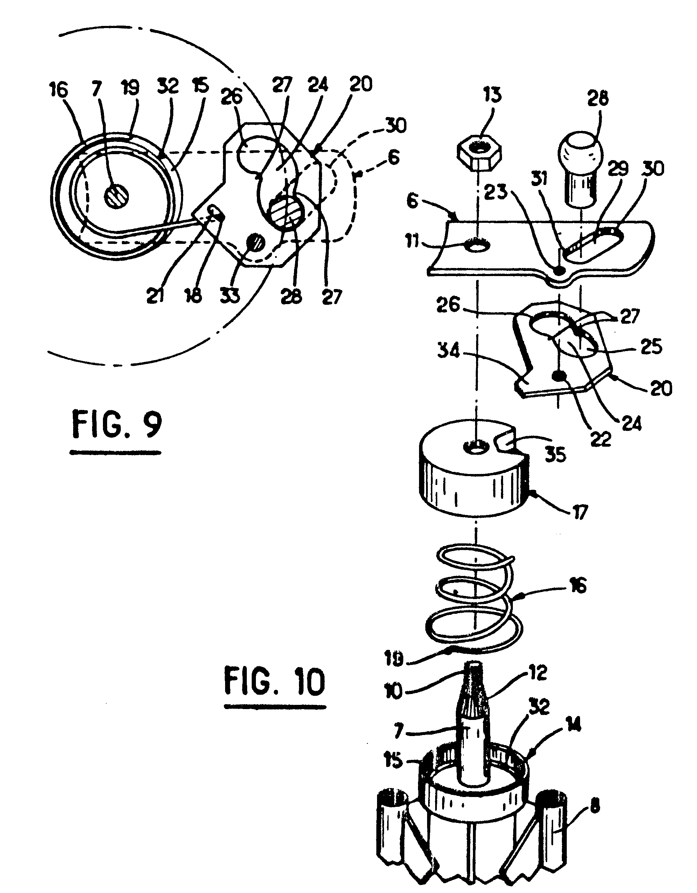

A partir de la position de «parking», qui correspond à la configuration de l'équipage mobile représentée sur la figure 7, une rotation en sens normal (flèche N) de l'arbre 7 sur un demi-tour du moteur entraîne une rotation du maneton 28 qui reste bloqué contre l'extrémité 30 de grand rayon de la lumière oblongue 29 de la manivelle 6, entraînée en rotation, sous l'effet du verrou 20 sollicité par le ressort 16, qui se détend par enroulement de ses spires (lesquelles ont été déroulées pendant la phase précédente de mise en position de «parking», en chargeant le ressort 16). En effet, le ressort 16 qui se détend tend à faire tourner le verrou 20 autour de l'axe 33 dans le sens contraire au sens de rotation normal de l'arbre 7 et de la manivelle 6, ce qui maintient le verrouillage du maneton 28 en position de grand rayon, jusqu'au moment où, le resort 16 s'étant suffisamment détendu, l'effort exercé par l'extrémité 19 du ressort 16 dans le trou 32 est nul. Ceci se produit légèrement avant la fin du premier demi-tour dans le sens normal, comme représenté sur la figure 8, qui montre que le déverrouillage commence alors par une rotation du verrou 20 autour de l'axe 33, dans le même sens maintenant que la manivelle 6 autour de l'axe moteur, c'est-à-dire dans le sens normal, sous l'effet du ressort 16 qui n'est plus contraint, puisqu'il ne prend plus appui par son extrémité 19 dans le trou 32, mais qui frotte légèrement dans la gorge 15. De la sorte, comme représenté sur la figure 9, à la fin du premier demi-tour dans le sens normal, le maneton 28 est à nouveau verrouillé contre l'extrémité 31 de petit rayon de la lumière oblongue 29 de la manivelle 6, dans une position qu'il conservera tant que le moteur ne sera pas à nouveau entraîné en sens contraire, et on constate sur la figure 9 que l'extrémité 19 du ressort 16 n'est plus engagée dans le trou 32, mais se déplace sur le fond de la gorge 15. L'équipage mobile revient dans une configuration identique à celle de la figure 3, qui correspond à un balayage normal des essuie-glaces entre les positions A et B.

Le passage de la position de «parking» C au fonctionnement normal est donc obtenu par un premier balayage de la position C à la position B, pendant le premier demi-tour dans le sens normal, suivi d'un balayage de la position B à la position A, pendant le second demi-tour suivant, puis le balayage normal peut se poursuivre entre les positions A et B.

Il est à noter que le positionnement du verrou 20 se fait toujours sans effort pour ce dernier, quelque soit le sens de rotation de l'arbre 7, car, dans chaque cas, le maneton 28 est positionné dans l'extrémité 30 ou 31 convenable de la lumière oblongue 29, compte tenu du sens de rotation de la manivelle 6, par le sens de la sollicitation des efforts résistants.

La variante de réalisation représentée sur la figure 10 ne se distingue essentiellement de celle de la figure 2 que par le fait que l'extrémité supérieure du ressort 16 n'est plus engagée dans une lumière de manœuvre du verrou 20, après avoir traversé le cache 17, mais elle est fixée au cache 17, en étant par exemple engagée dans un petit trou dans le fond de ce cache 17, et la sollicitation du verrou 20 à partir du ressort 16 est transmise par une patte 34 du verrou 20 qui est engagée avec un petit jeu dans une échancrure 35 ménagée dans les parois externes du cache 17. Le fonctionnement de cette variante est absolument identique à celui de la réalisation de la figure 2.

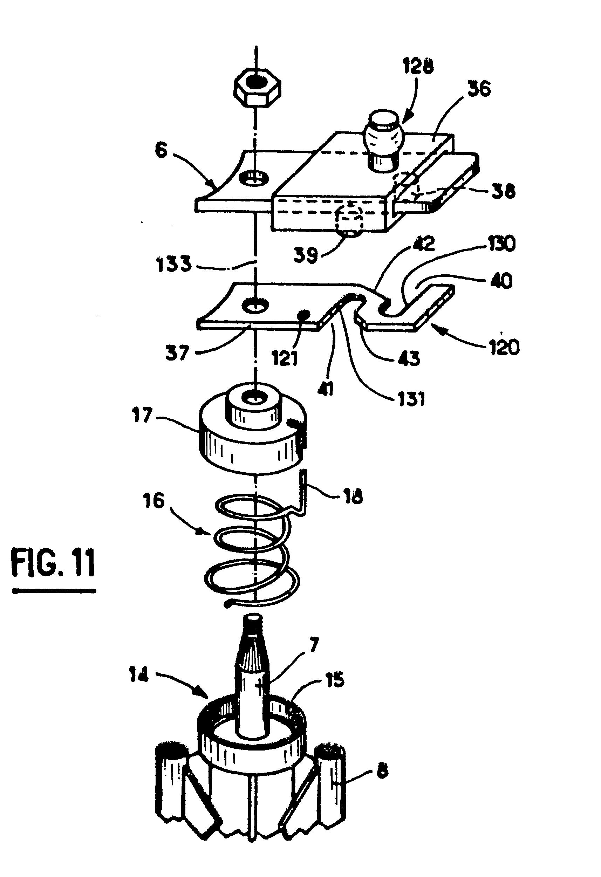

En se reportant aux figures 11 à 14, on peut voir une autre variante de réalisation du dispositif selon l'invention. Les éléments de cette variante de réalisation identiques ou jouant des rôles semblables à des éléments déjà décrits avec référence aux figures précédentes sont désignés ou bien par les mêmes références numériques, ou bien par la somme de la référence numérique précédente et du chiffre 100. La description de ces éléments ne sera pas reprise ou ne sera effectuée que très succinctement.

Le maneton 128 est monté sur un coulisseau 36 qui peut se déplacer radialement sur la manivelle 6. Cette manivelle 6 est formée par un plat dont les bords longitudinaux sont parallèles; le coulisseau 36 a, par exemple, une section transversale creuse rectangulaire dans laquelle est engagé le plat formant la manivelle 6 de telle sorte que le coulisseau 36 peut se déplacer en translation sur la manivelle. Le maneton 128 est disposé du côté du coulisseau 36 opposé au moteur 8. Le verrou 120, disposé entre le moteur 8 et la manivelle 6, comporte un bras 37, par exemple réalisé avec un profilé plat. Ce bras 37 est monté pivotant, par rapport à la manivelle 6, autour d'un axe 133 confondu avec l'axe moteur 7. L'axe 133 peut donc être considéré comme parallèle à l'axe moteur 7.

Le coulisseau 36 comporte, du côté du verrou 120, et respectivement au voisinage de chaque bord longitudinal, des pions 38, 39 propres à coopérer avec les butées respectives 130, 131. Les pions 38, 39 sont décalés radialement, le pion 39 étant plus près de l'axe 133 que le pion 38.

Le verrou 120 comporte une échancrure 40, 41 sur chacun de ses bords longitudinaux; chaque échancrure s'ouvre transversalement par rapport à la direction longitudinale du verrou 120. Les deux échancrures 40, 41 sont décalées radialement l'une par rapport à l'autre, l'échancrure 40 étant plus éloignée de l'axe 133 que l'échancrure 41. Comme visible sur le dessin, chaque échancrure est limitée par deux bords parallèles, orthogonaux à la direction longitudinale moyenne du verrou 120; le fond de chaque échancrure est incurvé, sensiblement en arc de cercle.

Le bord de l'échancrure 40 situé du côté de l'axe 133 se raccorde au bord longitudinal du verrou 120 par une rampe 42 inclinée par rapport à l'axe longitudinal du verrou 120; cette rampe 42 s'écarte progressivement de l'autre bord de l'échancrure 40 de manière à faciliter l'entrée (ou la sortie) du pion 38 dans ladite échancrure 40.

D'une manière semblable, l'échancrure 41 comporte une entrée évasée délimitée par une rampe 43 inclinée par rapport à l'axe longitudinal du bras 120; cette rampe 43 assure le raccordement du bord de l'échancrure 41 éloigné de l'axe 133 et du bord longitudinal du verrou 120.

Les rampes 42 et 43 peuvent être sensiblement rectilignes de telle sorte que le contour de raccordement de l'échancrure et du bord longitudinal du verrou 120 est un contour anguleux. Les échancrures 40, 41 sont orientées en sens inverses.

Le fonctionnement du dispositif de la figure 11 résulte des explications précédentes.

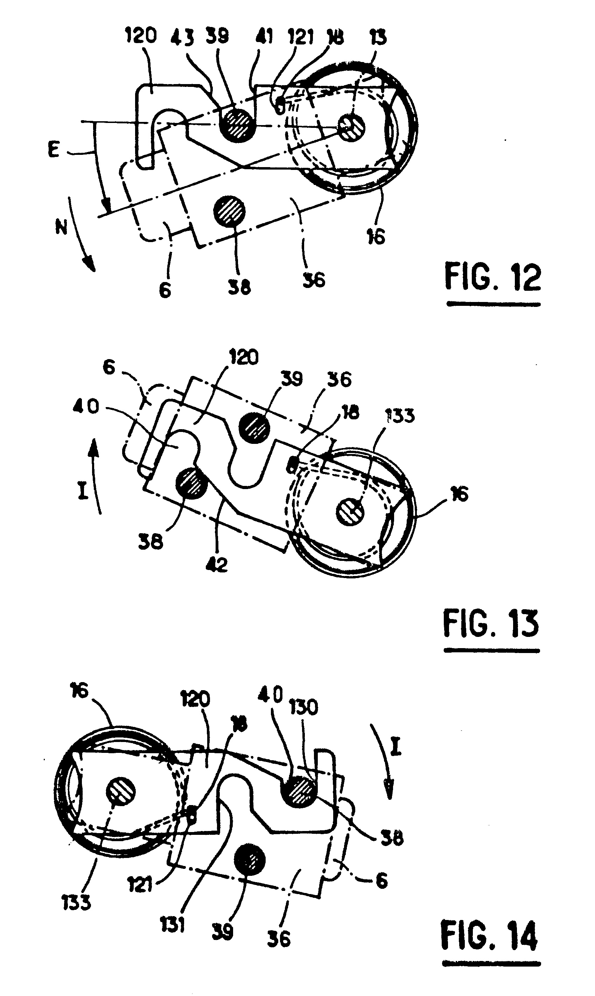

Lorsque l'arbre moteur 7 tourne dans le sens normal N, comme représenté sur la figure 12, la manivelle 6, qui est calée en rotation sur l'arbre 7, tourne dans ce sens N.

Le verrou 120, qui est monté libre en rotation par rapport à l'axe 7 et par rapport à la manivelle 6, se trouve en retard par rapport à ladite manivelle; en outre, le verrou 120 est freiné par le ressort 16 qui frotte contre le fond de la gorge 15; le prolongement 18 de ce ressort 16 est en effet engagé dans la lumière 121 prévue dans le verrou 120.

Dans ces conditions, l'entraînement en rotation du verrou 120 va s'effectuer par l'intermédiaire du pion 39 engagé dans l'échancrure 41 la plus proche de l'axe 133 (figure 12); suivant le sens de rotation N, la manivelle 6 se trouve en avance d'un angle E par rapport au verrou 120.

La longueur efficace de la biellette et de la manivelle motrice 6, longueur efficace qui correspond à la distance du maneton 128 à l'axe 133, correspond au fonctionnement normal de l'essuie-glace.

Pour obtenir la venue de l'essuie-glace en position de «parking», on inverse, comme expliqué précédemment, le sens de rotation du moteur 8 et donc le sens de rotation de la manivelle 6.

La figure 13 illustre le mécanisme au début de l'inversion du mouvement.

La manivelle 6 avant de pouvoir assurer l'entraînement du verrou 120 dans le sens I, tourne par rapport à ce verrou jusqu'à ce que le pion 38 vienne coopérer avec la rampe 42. Du fait du freinage en rotation exercé par le ressort 16 sur le verrou 120, et du fait de l'inclinaison de la rampe 42, le pion 38 va être soumis à l'action d'une composante radiale résultant de l'effort exercé par la manivelle 6 sur le verrou 120, par l'intermédiaire de ce pion 38. Le coulisseau 36, monté libre en translation sur la manivelle 6, va se déplacer radialement vers l'extérieur, tandis que la manivelle 6 va continuer son mouvement de rotation relatif par rapport au verrou 120.

Le pion 38 va entrer complètement dans l'encoche 40 et venir se bloquer dans le fond incurvé de cette encoche comme représenté sur la figure 14.

La longueur efficace de la biellette et de la manivelle motrice est alors augmentée et, lorsque l'essuie-glace arrivera en position d'arrêt fixe, il occupera la position C (figure 1) ou position de «parking».

Comme expliqué précédemment, l'extrémité inférieure 19 du ressort 16 peut venir s'arc-bouter, lors de cette rotation en sens inverse I, contre une butée formée par un trou 32 prévu dans la gorge 15. La position angulaire de cette butée 32 est avantageusement semblable à celle décrite précédemment, c'est-à-dire de manière que l'arc-boutement se produise à la suite d'environ 1/2 tour de rotation du moteur en sens inverse I. Grâce à cette caractéristique, l'augmentation du rayon efficace de la manivelle motrice ne se produit matériellement que pendant la seconde moitié du tour de rotation en sens contraire du moteur, après la coopération de l'extrémité 19 du ressort et de la butée 32. Il en résulte un avantage important par rapport à un dispositif selon lequel l'augmentation de la longueur efficace serait obtenue dès le basculement d'un organe excentré, qui suivrait immédiatement une inversion du sens de rotation du moteur.

Pour cette raison, en effet, le débattement angulaire de la manivelle réceptrice, pendant le demi-tour qui suivrait l'inversion du sens de rotation, serait commandé par une timonerie allongée, et donc l'inversion du balayage s'effectuerait à la fin de ce demi-tour, dans une position qui ne serait pas une position extrême de balayage normal, mais qui serait située dans le secteur de balayage normal, de sorte que le dernier cycle de balayage qui précède un arrêt en position de «parking», serait incomplet du côté opposé à la position de «parking», ce qui peut être gênant pour la visibilité. Ceci n'est pas le cas dans l'invention, car le rayon efficace de la manivelle motrice n'est augmenté qu'après la dernière inversion de balayage sur la position extrême de balayage normal avant l'arrêt fixe en position de «parking».

**Revendications**

1. Dispositif d'essuie-glace, comprenant un moteur électrique réversible sur l'arbre (7) duquel une manivelle motrice (6) est montée solidaire en rotation, au voisinage d'une première extrémité, ladite manivelle motrice (6) étant reliée, au voisinage de sa seconde extrémité, à une biellette (5) par ailleurs montée pivotante sur une manivelle réceptrice (4) qui entraîne un bras (2) porte-balai d'essui-glace en rotation autour d'un axe fixe (3), de telle sorte que la rotation du moteur (8) dans un premier sens, ou sens normal (N), est transformée en un mouvement angulaire alternatif du bras (2) porte-balai autour de l'axe fixe (3), sur un secteur de balayage normal (A, B), dont une extrémité (A) est une position d'arrêt fixe, le dispositif comprenant de plus un mécanisme de changement de la longueur efficace de la biellette (5) et de la manivelle motrice (6), susceptible d'être actionné à la suite d'un changement du sens de rotation du moteur (8), ce mécanisme commandant, quand le moteur passe du sens normal au sens inverse, l'allongement de ladite longueur efficace et donc la venue du bras (2) porte-balai dans une position angulaire (C) de repos située à l'extérieur du secteur de balayage normal (A, B) et commandant le retour à la longueur efficace initiale quand le moteur tourne à nouveau dans le sens normal à partir de ladite position angulaire (C) de repos externe au secteur de balayage normal, ledit mécanisme de changement de longueur efficace comprenant un maneton (28, 128) sur lequel s'articule la biellette, ce maneton étant monté de manière à pouvoir se déplacer suivant une trajectoire présentant une composante radiale par rapport à la manivelle (6), et un mécanisme de verrouillage (20, 120) susceptible de verrouiller le maneton contre une première butée relativement proche de l'axe moteur ou contre une deuxième butée relativement éloignée de l'axe moteur, selon le sens de rotation du moteur, le mécanisme de verrouillage comprenant un verrou (20, 120) monté pivotant par rapport à la manivelle autour d'un axe parallèle à l'axe moteur (7), le verrou (20) étant asservi en position par un ensemble élastique (14, 16, 17), caractérisé par le fait que le verrou (20, 120) est disposé entre le moteur (8) et la manivelle motrice (6) et que l'ensemble élastique (14, 16, 17), lorsque le moteur (8) tourne dans le sens normal (N) tend à faire tourner le verrou (20, 120) autour de son axe d'articulation (33, 133) dans un sens tel que le maneton (28) ou une pièce solidaire de ce maneton (128) soit verrouillée contre la première butée (31, 131) la plus proche de l'axe moteur, l'ensemble élastique (14, 16, 17) étant chargé à la suite de l'inversion du sens de rotation du moteur (8) de manière à faire tourner le verrou (20, 120) autour de son axe d'articulation (33, 133), par rapport à la manivelle motrice (6), dans le sens qui déverrouille le maneton (28) ou une pièce solidaire de ce maneton (128), et autorise le déplacement dudit maneton ou de ladite pièce vers la deuxième butée (30, 130) la plus éloignée de l'axe du moteur, contre laquelle le verrouillage est alors assuré, ledit ensemble élastique étant déchargé à la suite d'une nouvelle rotation du moteur dans le sens normal de manière à assurer à nouveau le verrouillage du maneton (28) ou de la pièce solidaire de ce maneton (128) contre la butée (31, 131) la plus proche de l'axe moteur.

2. Dispositif selon la revendication 1, caractérisé par le fait que l'ensemble élastique comprend un ressort à spires (16) disposé autour de l'arbre (7) de sortie du moteur (8), dans une gorge (15) annulaire ménagée dans une pièce (14) solidaire du stator du moteur (8), le ressort (16) étant entraîné en rotation autour de l'arbre (7) du moteur par le verrou (20, 120), avec un frottement suffisant de la spire d'extrémité du ressort (16) logée dans la gorge (15) contre cette dernière, lorsque le moteur tourne dans le sens normal (N), pour que le verrou (20, 120) soit sollicité autour de son axe d'articulation (33, 133) dans un sens qui assure le verrouillage du maneton (28) ou d'une pièce solidaire de ce maneton (128) contre la butée (31, 131) la plus proche de l'axe moteur, tandis que lors d'une rotation du moteur en sens inverse, le ressort (16) est chargé et fait pivoter le verrou (20, 120) autour de son axe d'articulation (33, 133) par rapport à la manivelle motrice (6) de telle sorte que le maneton (28, 128) est déverrouillé et se déplace avec une composante radiale par rapport à la manivelle pour venir en appui et être verrouillé contre la butée (30, 130) la plus éloignée de l'axe moteur.

3. Dispositif selon la revendication 2, caractérisé par le fait que la gorge (15) comporte un logement formant butée (32) contre laquelle l'extrémité de la spire du ressort (16) est propre à s'arc-bouter lors de la rotation du moteur en sens inverse (I).

4. Dispositif selon la revendication 3, caractérisé par le fait que le logement formant butée (32) est disposé angulairement de manière que l'arc-boutement se produise à la suite d'environ un demi-tour de rotation du moteur en sens inverse (I).

5. Dispositif selon la revendication 4, caractérisé par le fait que la butée présente dans la gorge (15) est un trou (32) ménagé dans le fond de celle-ci, et l'extrémité (19) du ressort (16) logée dans la gorge (15) est inclinée vers le fond de celle-ci, de telle sorte que l'extrémité inclinée (19) du ressort (16) ne se bloque pas ou se bloque dans le trou (32), selon que le moteur (8) tourne dans le sens normal ou dans le sens contraire.

6. Dispositif selon la revendication 2, caractérisé par le fait que les spires du ressort (16) entourent l'arbre (7) de sortie du moteur (8) de telle sorte que le ressort (16) est chargé par déroulement des spires et déchargé par enroulement des spires.

7. Dispositif selon la revendication 2, caractérisé par le fait que le ressort (16) est disposé entre la gorge (15) et un cache (17) de forme cupulaire monté fou sur l'arbre (7) de sortie du moteur, l'extrémité du ressort (16) qui n'est pas logée dans la gorge traversant le cache (17) et étant retenue, avec du jeu, dans une lumière de manœuvre (21, 121) du verrou (20, 120).

8. Dispositif selon la revendication 2, caractérisé par le fait que le ressort (16) est disposé entre la gorge (15) et un cache (17) de forme cupulaire monté fou sur l'arbre (7) de sortie du moteur, l'extrémité du ressort (16) qui n'est pas logée dans la gorge (15) étant fixée dans le cache (17), qui présente, dans sa paroi externe, une échancrure (35) dans laquelle s'engage, avec du jeu, une patte (34) solidaire du verrou (20).

9. Dispositif selon l'une quelconque des revendications précédentes, caractérisé par le fait que le mécanisme de changement de longueur efficace comprend une lumière oblongue (29), ménagée dans la manivelle motrice (6) au voisinage de la seconde extrémité de celle-ci, cette lumière étant disposée de façon que, dans le sens normal de rotation (N) du moteur (8), le maneton (28), qui est engagé dans la lumière oblongue (29) soit entraîné en rotation par l'extrémité de la lumière oblongue (29) constituant la butée (31) la plus proche de l'axe de rotation, et que l'inversion du sens de rotation du moteur (8) déplace le maneton (28) dans la lumière oblongue jusqu'à ce qu'il soit entraîné en rotation par l'autre extrémité de la lumière oblongue (29) qui constitue la deuxième butée (30) la plus éloignée de l'axe de rotation de la manivelle motrice (6), le verrou (20) étant monté pivotant sur la manivelle motrice (6) autour d'un axe (33) différent de l'axe moteur (7).

10. Dispositif selon la revendication 9, caractérisé par le fait que la lumière oblongue (29) est inclinée par rapport à l'axe longitudinal de la manivelle (6).

11. Dispositif selon la revendication 10, caractérisé par le fait que l'angle d'inclinaison entre l'axe de la lumière oblongue (29) et l'axe longitudinal de la manivelle motrice (6) est compris entre 10 degrés et 80 degrés.

12. Dispositif selon l'une quelconque des revendications 1 à 8, caractérisé par le fait que le maneton (128) est monté sur un coulisseau (36) pouvant se déplacer radialement sur la manivelle (6), tandis que le verrou (120) comporte un bras (37) monté pivotant, par rapport à la manivelle (6), autour d'un axe (133) confondu avec l'axe moteur (7).

13. Dispositif selon la revendication 12, caractérisé par le fait que le coulisseau comporte, du côté du verrou (120) au moins un pion (38, 39) propre à coopérer avec les susdites première (130) et seconde (131) butées.

14. Dispositif selon la revendication 12 ou 13, caractérisé par le fait que le bras du verrou (120) comporte une échancrure sur chacun de ses bords longitudinaux, les deux échancrures étant décalés radialement l'une par rapport à l'autre pour constituer, les susdites première et seconde butées, le susdit coulisseau comportant deux pions eux-mêmes décalés radialement, propres à coopérer avec chaque échancrure selon la position angulaire relative du verrou et de la manivelle, lesdites échancrures comportant une rampe pour faciliter l'entrée ou la sortie du pion lors du mouvement de rotation relatif entre le verrou et la manivelle.

**Patentansprüche**

1. Einrichtung für einen Scheibenwischer, mit einem in der Drehrichtung steuerbaren Motor (8), mit dessen Antriebswelle (7) eine Antriebskurbel (6) drehfest verbunden ist, deren freies Ende über eine Treibstange (5) mit einer Abtriebskurbel (4) verbunden ist, die einen um eine feste Achse (3) verschwenkbaren Wischerarm (2) in der Weise antreibt, dass bei einer Drehrichtung des Motors (8) in einer Richtung (Normaldrehrichtung N) der Wischerarm (2) um die feste Achse (3) über ein Normalwischfeld (A, B) hin und her geschwenkt wird, wobei einer Seite (A) des Wischfeldes eine Halteposition zugeordnet ist, ferner mit einem Mechanismus zur Veränderung der wirksamen Länge der Treibstange (5) und der Antriebskurbel (6), der durch Änderung der Drehrichtung des Motors (8) gegensinnig zur Normaldrehrichtung (N) in der Weise betätigbar ist, dass durch Vergrösserung der vorgenannten wirksamen Länge der Wischerarm (2) eine Ruhestellung (C) einnimmt, die ausserhalb des Wischfeldes (A, B) liegt, und dass bei einem Antrieb in Normaldrehrichtung (N) aus der Ruhestellung (C) heraus die wirksamen Längen wieder auf ihre Ausgangslänge zurückgeführt werden, wobei der genannte Mechanismus zur Veränderung der wirksamen Längen einen Zapfen (28, 128) aufweist, an dem die Treibstange (5) angelenkt ist und der relativ zur Antriebskurbel (6) auf einer Bahn verschiebbar gelagert ist, die eine in Bezug auf die Antriebskurbel (6) radial gerichtete Komponente aufweist, sowie mit einem Verriegelungsmechanismus (20, 120) zur Verriegelung des Zapfens (28, 128) gegen einen ersten der Antriebswelle (7) naheliegenden Anschlag und gegen einen zweiten, von der Antriebswelle (7) entfernt liegenden Anschlag je nach Drehrichtung des Motors, wobei der Verriegelungsmechanismus einen Riegel (20, 120) aufweist, der um eine zur Antriebswelle (7) parallele Achse schwenkbar an der Antriebskurbel (6) gelagert ist und der durch eine federnde Anordnung (14, 16, 17) in Stellung gehalten wird, dadurch gekennzeichnet, dass der Riegel (20, 120) zwischen dem Motor (8) und der Antriebskurbel (6) angeordnet ist und dass die federnde Anordnung (14, 16, 17) bei einer Drehung des Motors (8) in Normaldrehrichtung (N) den Riegel (20, 120) um seine Schwenkachse (33, 133) in der Weise verschwenkt, dass der Zapfen (28) oder ein mit dem Zapfen fest verbundenes Teil (128) gegen den ersten, nahe der Antriebswelle (7) liegenden Anschlag (31, 131) verriegelt ist, und dass die federnde Anordnung bei einer Umkehr der Drehrichtung des Motors (8) in der Weise beaufschlagt wird, dass sie den Riegel (20, 120) um seine Schwenkachse (33, 133) in Gegenrichtung verschwenkt und den Zapfen (28) oder das mit diesem fest verbundene Teil (128) entriegelt und eine Verschiebung des Zapfens (28) oder des mit diesem verbundenen Teiles (128) gegen den zweiten, von der Antriebswelle entfernter liegenden Anschlag (30, 130) bewirkt und gegen diesen verriegelt und dass die genannte federnde Anordnung (14, 16, 17) bei einer erneuten Umkehr der Drehrichtung des Motors (8) in Normaldrehrichtung (N) in der Weise beaufschlagt wird, dass sie erneut die Verriegelung des Zapfens (28) oder des damit fest verbundenen Teiles (128) gegen den der Antriebswelle (7) nächstliegenden Anschlag (31, 131) bewirkt.

2. Einrichtung nach Anspruch 1, dadurch gekennzeichnet, dass die federnde Anordnung eine Wickelfeder (16) aufweist, deren Windungen um die Antriebswelle (7) herum verlaufen und die in einer ringförmigen Ausnehmung (15) am Stator (14) des Motors (87) gehalten und durch den Riegel (20, 120) bei einer Drehung der Antriebswelle (7) mitgedreht wird, wobei die äusserste Windung der Wickelfeder (16) in der Ausnehmung (15) reibschlüssig gehalten ist, so dass bei einer Drehung des Motors (68) in Normaldrehrichtung (N) der Riegel (20, 120) um seine Schwenkachse (33, 133) in einer Richtung verschwenkt wird, die eine Verriegelung des Zapfens (28) oder eines mit dem Zapfen fest verbundenen Teiles (128) gegen den der Antriebswelle (7) naheliegenden Anschlag (31, 131) bewirkt und bei einer Drehung des Motors (8) im Gegensinne die Wickelfeder (16) in Gegenrichtung gespannt wird und den Riegel (20, 120) um seine Schwenkachse (33, 133) gegenüber der Antriebskurbel (6) in der Weise verschwenkt, dass der Zapfen (28, 128) entriegelt und sich mit einer in Bezug auf die Antriebskurbel (6) radialen Komponente gegen den zweiten, von der Antriebswelle (7) entfernter liegenden Anschlag (30, 130) bewegt.

3. Einrichtung nach Anspruch 2, dadurch gekennzeichnet, dass die Ausnehmung (15) einen Anschlag (32) aufweist, gegen den sich das freie Ende der äussersten Windung der Wickelfeder (16) bei einer Drehung des Motors (8) in der Gegenrichtung (I) abstützt.

4. Einrichtung nach Anspruch 3, dadurch gekennzeichnet, dass der Anschlag (32) winklig angeordnet ist, so dass die Abstützung etwa nach einer halben Umdrehung des Motors in Gegenrichtung (I) erfolgt.

5. Einrichtung nach Anspruch 4, dadurch gekennzeichnet, dass der Anschlag durch eine Bohrung (35) im Boden der Ausnehmung (15) gebildet wird und dass das äusserste, in der Ausnehmung (15) gehaltene Ende (19) der Feder (16) gegen den Boden der Ausnehmung (15) abgewinkelt ist in der Weise, dass je nach Drehrichtung des Motors (8) das abgewinkelte Ende (19) der Feder (16) von der Bohrung (35) formschlüssig gehalten wird oder diese frei überstreicht.

6. Einrichtung nach Anspruch 2, dadurch gekennzeichnet, dass die Windungen der Wickelfeder (16) die Antriebswelle (7) des Motors (8) in der Weise umgeben, dass die Wickelfeder durch Abrollen der Windungen gespannt und durch Aufrollen der Windungen entspannt wird.

7. Einrichtung nach Anspruch 2, dadurch gekennzeichnet, dass die Wickelfeder (16) zwischen der Ausnehmung (15) und einer glockenförmigen Abdeckung (17) angeordnet ist, die frei drehbar auf der Antriebswelle (7) des Motors (8) gelagert ist und dass das der Ausnehmung (15) abgewandte Ende der Wicklefeder (16) durch die Abdeckung (17) hindurchgeführt und mit Spiel in einem Loch (21, 121) des Riegels (20, 120) gehalten ist.

8. Einrichtung nach Anspruch 2, dadurch gekennzeichnet, dass die Wickelfeder (16) zwischen der Ausnehmung (15) und einer glockenförmigen Abdeckung (17) gehalten ist, die frei drehbar auf der Antriebswelle (7) des Motors gelagert ist und dass das der Ausnehmung (15) abgekehrte Ende der Wickelfeder (16) an der Abdeckung (17) befestigt ist und dass die Abdeckung (17) auf ihrer Aussenseite eine bogenförmige Ausnehmung (35) aufweist, in die mit Spiel ein Vorsprung (34) des Riegels (20) formschlüssig eingreift.

9. Einrichtung nach einem der vorhergehenden Ansprüche, dadurch gekennzeichnet, dass der Mechanismus zur Veränderung der wirksamen Längen ein Langloch (29) aufweist, das in der Antriebskurbel (6) im Bereich ihres freien Endes angeordnet ist und dass dieses Langloch (29) in der Weise ausgerichtet ist, dass bei Normaldrehrichtung (N) des Motors (8) der in das Langloch eingreifende Zapfen (28) an das den der Drehachse naheliegenden Anschlag (31) bildende Ende des Langlochs (29) gezogen wird und dass bei Umkehr der Drehrichtung der Zapfen (28) im Langloch (29) an das den zweiten, der Drehachse entfernter liegenden Anschlag (30) bildende Ende des Langlochs (29) gezogen wird und dass der Riegel (20) auf der Antriebskurbel (6) um eine von der Motordrehachse getrennte Achse (33) schwenkbar gelagert ist.

10. Einrichtung nach Anspruch 9, dadurch gekennzeichnet, dass das Langloch (29) in Bezug auf die Längsachse der Antriebskurbel (6) geneigt ausgerichtet ist.

11. Einrichtung nach Anspruch 10, dadurch gekennzeichnet, dass der Neigungswinkel zwischen der Achse des Langlochs (29) und der Längsachse der Antriebskurbel (6) zwischen 10° und 80° beträgt.

12. Einrichtung nach einem der Ansprüche 1 bis 8, dadurch gekennzeichnet, dass der Zapfen (128) auf einem Schieber (36) befestigt ist, der auf der Antriebskurbel (6) radial verschiebbar gehalten ist und dass der Riegel (120) über einen Arm (37) in Bezug auf die Antriebskurbel (6) koaxial zur Antriebswelle (7) schwenkbar gelagert ist.

13. Einrichtung nach Anspruch 12, dadurch gekennzeichnet, dass der Schieber (36) auf der dem Riegel (120) zugekehrten Seite mit wenigstens einem Zapfen (38, 39) versehen ist, der mit dem vorgenannten ersten Anschlag (130) und zweiten Anschlag (131) in Wirkverbindung steht.

14. Enrichtung nach den Ansprüchen 12 oder 13, dadurch gekennzeichnet, dass der Arm (37) des Riegels (120) an seinen beiden Längskanten jeweils eine Ausnehmung aufweist, dass die Ausnehmungen in radialer Richtung versetzt zueinander angeordnet sind und die vorgenannten ersten und zweiten Anschläge bilden und dass der genannte Schieber zwei entsprechend radial versetzte Zapfen aufweist, wobei jeder Zapfen jeweils mit einer Ausnehmung entsprechend der Winkelstellung zwischen Riegel und Antriebskurbel in Wirkverbindung steht und dass die Ausnehmungen jeweils eine Leitkante zur Vereinfachung des Einlaufs bzw. Auslaufs des Zapfens entsprechend der Relativbewegung zwischen Riegel und Kurbelarm aufweisen.

## Claims

1. A windscreen wiper arrangement comprising an electric motor reversible on shaft (7) wherefrom a driving crank (6) is mounted fixed for rotation, near a first end, the said driving crank (6) being connected near its second end to a link rod (5) which is moreover mounted to pivot on a driven crank (4) which drives a windscreen wiper arm (2) in rotation around a fixed pin (3) in such a way that the rotation of motor (8) in a first direction, or normal direction (N) is transformed into an alternating angular motion of the windscreen wiper arm (2) around the fixed pin (3), over a normal wiping sector (A, B), whereof one end (a) is a fixed stop position, the arrangement comprising moreover a mechanism for changing the effective length of the link rod (5) and of the driving crank (6), capable of being activated following a change in the direction of rotation of motor (8), this mechanism actuating the extension of the said effective length and hence the coming of the windscreen wiper arm (2) into an angular rest position (C), when the motor passes from the normal direction to the reverse direction, which position is situated outside the normal wiping sector (A, B), and actuating the return to the initial effective length from the said angular rest position (C) outside the normal wiping sector, when the motor is again turning in the normal direction, the said mechanism for changing the effective length comprising a crankpin (28, 128) whereon the link rod is articulated, this crankpin being mounted so as to be capable of displacement along a trajectory having a radial component in relation to the crank (6) and a locking mechanism (20, 120) capable of locking the crankpin against a first stop relatively close to the drive shaft or against a second stop relatively remote from the drive shaft according to the direction of rotation of the motor, the locking mechanism comprising a bolt (20, 120) mounted to pivot in relation to the crank around an axis parallel to the drive shaft (7), the bolt (2) being controlled in position by an elastic assembly (14, 16, 17) characterised in that the bolt (20, 120) is disposed between the motor (8) and the driving crank (6) and that the elastic assembly (14, 16, 17) tends, when the motor (8) is turning in the normal direction (N), to cause the bolt (20, 120) to turn around its articulation axis (33, 133) in a direction such that the crankpin (28), or a component fixed to this crankpin (128), is locked against the first stop (31, 131), the nearer to the drive shaft, the elastic assembly (14, 16, 17) being loaded subsequent to the reversal of the direction of rotation of the motor (8), so as to cause the bolt (20, 120) to turn around its articulation axis (33, 133), in relation to the driving crank (6), in the direction unlocking the crankpin (28) or a component fixed to this crankpin (128), and allows the said crankpin or the said component to be displaced towards the second stop (30, 130) which is the more remote from the shaft of the motor, the locking whereon is then ensured, the said elastic assembly then being released following fresh rotation of the motor in the normal direction, so as to ensure the re-locking of the crankpin (28) or of the component fixed to this crankpin (128) against the stop (31, 131), which is the nearer to the drive shaft.

2. An arrangement according to claim 1, characterised in that the elastic assembly comprises a coil spring (16) disposed around the output shaft (7) of the motor (8) in an annular groove (15) arranged in a component (14) integral with the stator of the motor (8), the spring (16) being driven in rotation around the shaft (7) of the motor by the bolt (20, 120), with sufficient friction of the end coil of the spring (16) accomodated in the groove (15) against the latter when the motor is turning in the normal direction (N), for the bolt (20, 120) to be strained around its articulation axis (33, 133) in the direction ensuring the locking of the crankpin (28), or of a component fixed to this crankpin (128) against the stop (31, 131), the nearer to the drive shaft, whilst during rotation of the motor in the reverse direction, the spring (16) is loaded and causes the bolt (20, 120) to turn around its articulation axis (33, 133) in relation to the driving crank (6) in such a way that the crankpin (28, 128) is released and is displaced with a radial component in relation to the crank, to come to bear against, and to be locked against the stop (30, 130) which is the more remote from the drive shaft.

3. An arrangement according to claim 2, characterised in that the groove (15) comprises a recess forming a stop (32) against which the end of the coil of the spring (16) is capable of bearing during the rotation of the motor in the reverse direction (I).

4. An arrangement according to claim 3, characterised in that the recess forming the stop (32) is disposed angularly in such a way that the bearing action is produced after approximately one half turn of rotation of the motor in the reverse direction (I).

5. An arrangement according to claim 4, characterised in that the stop in the groove (15) is a hole (32) arranged at the bottom of the latter and that the end (19) of the spring (16) accomodated in the groove (15) is sloping towards the bottom of the latter in such a way that the inclined end (19) of the spring (16) is not blocked, or is blocked in the hole (32), depending on the direction of rotation of the motor (8) in the normal direction or in the reverse direction.

6. An arrangement according to claim 2, characterised in that the coils of the spring (16) surround the output shaft (7) of the motor (8) in such a way that the spring (16) is loaded by the unwinding of the coils and relased by the winding up of the coils.

7. An arrangement according to claim 2, characterised in that the spring (16) is disposed between the groove (15) and a cup shaped collar (17) mounted to idle on the output shaft (7) of the motor, the end of the spring (16) not accomodated in the groove, passing through the collar (17) and being retained with clearance in a actuating port (21, 121) of the bolt (20, 120).

8. An arrangement according to claim 2, characterised in that the spring (16) is disposed between the groove (15) and a cup shaped collar (17) mounted to idle on the output shaft (7) of the motor, the end of the spring (16) not accomodated in the groove (15) being fixed in the collar (17) which has on its outer wall a cut out (35) wherein there engages with clearance a tab (34), which is integral with bolt (20).

9. An arrangement according to any one of the preceding claims, characterised in that the mechanism for changing the effective length comprises an oblong hole (29) arranged in the driving crank (6) near the second end of the latter, this hole being disposed so that in the normal direction of rotation (N) of the motor (8) the crankpin (28) which is engaged in the oblong hole (29) is driven in rotation by the end of the oblong hole (29) constituting the nearer stop (31) to the axis of rotation, and that the reversal of the direction of rotation of the motor (8) displaces the crankpin (28) in the oblong hole constituting the second stop (30), the more remote from the axis of rotation of the driving crank (6), the bolt (20) being mounted to pivot on the driving crank (6) around a pin (33) different from the drive shaft (7).

10. An arrangement according to claim 9, characterised in that the oblong hole (29) is inclined in relation to the longitudinal axis of the crank (6).

11. An arrangement according to claim 10, characterised in that the angle of inclination between the axis of the oblong hole (29) and the longitudinal axis of the driving crank (6) is comprised between 10 degrees and 80 degrees.

12. An arrangement according to any one of the claims 1 to 8, characterised in that the crankpin (128) is mounted on a slider (36), capable of radial displacement on the crank (6), whilst the bolt (120) comprises an arm (37) mounted to pivot in relation to the crank (6) around an axis (133) coaxial with the drive shaft (7).

13. An arrangement according to claim 12, characterised in that the slider comprises on the side the bolt (120) at least one pin (38, 39), capable of cooperating with the above mentioned first stop (130) and second stop (131).

14. An arrangement according to claim 12 or 13, characterised in that the arm of the bolt (120) comprises one cut out on each one of its longitudinal edges, the two cut outs being radially offset so as to constitute the above mentioned first and second stops, the above mentioned slider comprising two pins themselves radially offset, capable of cooperating with each cut out according to the relative angular position of the bolt and of the crank, the said cut outs comprising a ramp to facilitate the entry or emergence of the pin during the relative rotational motion between the bolt and the crank.

FIG. 1

FIG. 2

0 150 641

FIG. 3

FIG. 4

FIG. 5

13

FIG. 6

FIG. 7

FIG. 8

FIG. 9

FIG. 10

FIG. 11

FIG. 12

FIG. 13

FIG. 14